# EUROPEAN PATENT SPECIFICATION

(11) **EP 2 820 270 B1**
(45) Date of publication and mention of the grant of the patent: **25.07.2018**
(21) Application number: 13754643.8
(22) Date of filing: 18.02.2013
(51) Int. Cl.: F02C 7/045, F02C 7/24, F02K 3/06, F04D 29/66, F01D 9/04

(54) **GEARED GAS TURBINE ENGINE WITH REDUCED FAN NOISE**
VERZAHNTER GASTURBINENMOTOR MIT REDUZIERTEM LÜFTERGERÄUSCH
TURBINE À GAZ À RÉDUCTEUR, À BRUIT DE SOUFFLANTE RÉDUIT

(30) Priority: 29.02.2012 US 201213408382
(43) Date of publication of application: 07.01.2015
(73) Proprietor: United Technologies Corporation, Farmington, CT 06032 (US)
(72) Inventor: GILSON, Jonathan, West Hartford, Connecticut 06107 (US); MORIN, Bruce L., Springfield, Massachusetts 01104 (US); REBA, Ramons A., South Windsor, Connecticut 06074 (US); TOPOL, David A., West Hartford, Connecticut 06117 (US); LORD, Wesley K., South Glastonbury, Connecticut 06073 (US)
(74) Representative: Dehns
(86) International application number: PCT/US2013/026575
(87) International publication number: WO 2013/130295

(56) References cited:
- EP-A2- 1 517 022
- GB-A- 2 471 845
- US-A- 4 883 240
- US-A1- 2009 014 581
- US-A1- 2010 080 697
- US-A1- 2010 119 366
- US-B2- 7 540 354
- US-B2- 7 607 287
- "PurePower PW1000G Engine News", , 1 May 2010 (2010-05-01), XP055223208, Retrieved from the Internet: URL:http://www.purepowerengine.com/pdf/new sletters/PurePower_PW1000G_Engine_News_May 2010.pdf [retrieved on 2015-10-23]

## Description

### BACKGROUND

This application relates to a gas turbine engine having a gear reduction driving a fan, and wherein exit guide vanes for the fan are provided with noise reduction features.

Gas turbine engines are known, and typically include a fan delivering air into a compressor section. The air is compressed and passed into a combustion section where it is mixed with fuel and ignited. Products of this combustion pass downstream over turbine rotors, and the turbine rotors are driven to rotate the compressor and fan.

Traditionally, a low pressure turbine rotor drives a low pressure compressor section and the fan rotor at the identical speed. More recently, a gear reduction has been provided such that the fan can be rotated at a reduced rate.

With this provision of a gear, the diameter of the fan may be increased dramatically to achieve a number of operational benefits. Increasing fan diameter, however, implies that the fan noise sources will dominate the total engine noise signature.

A major fan noise source is caused by rotating turbulent wakes shed from the fan interacting with the stationary guide vanes. The stationary guide vanes, or fan exit guide vanes are positioned downstream of the fan. A discrete, or tonal, noise component of this interaction is caused by the specific number of fan wakes interacting with the specific number of vanes in a periodic fashion. A random, or broadband, noise source is generated from the nature of turbulence inside each fan wake interacting with each guide vane.

At a given engine power condition, if the ratio of guide vanes to fan blades is lower than a critical value, the tonal noise is said to be "cut-on" and may propagate to an outside observer location, e.g. an observer location either in the aircraft or on the ground. If the ratio of guide vanes to fan blades is above the critical value, however, the tonal noise is said to be "cut-off." Total engine noise may be dominated by tonal and/or broadband noise sources resulting from the fan wake/guide vane interaction.

Traditional acoustic design addresses tonal noise by targeting a cut-off vane count for subsonic fan tip speeds. The broadband noise, however, may require a lower vane count to decrease the number of turbulent sources. For a given number of fan blades, lowering the vane count below a critical value creates a cut-on condition and thus higher tone noise levels.

Thus, there is a tradeoff between addressing the two types of noise.

While cut-off vane counts have been utilized in the past, they have not been known in an engine including the above-mentioned gear reduction.

A fan section having the features of the preamble of claim 1 is disclosed in "PurePower® PW 1000G Engine News" (XP055223208).

Gas turbine engines having acoustic treatments are disclosed in GB 2471845A and US 2010/0080697 A1. A micro-perforated acoustic liner is disclosed in US 7540354B2.

### SUMMARY

In accordance with the invention, there is provided a fan section for use in a gas turbine engine as set forth in claim 1.

In an example, the sweep angle is greater than or equal to about 15 degrees.

In a further example, the lean angle is greater than or equal to about 7 degrees.

The invention also provides a gas turbine engine as recited in claim 4.

These and other features of the invention will be better understood from the following specifications and drawings, the following of which is a brief description.

### BRIEF DESCRIPTION OF THE DRAWINGS

Figure 1 shows a gas turbine engine.
Figure 2A shows a detail of a fan exit guide vane.
Figure 2B shows another view of the Figure 2A guide vane.
Figure 3A shows a cross-section through a guide vane.
Figure 3B shows a portion of a material incorporated into the Figure 3A guide vane.
Figure 3C shows another feature of the material.

### DETAILED DESCRIPTION

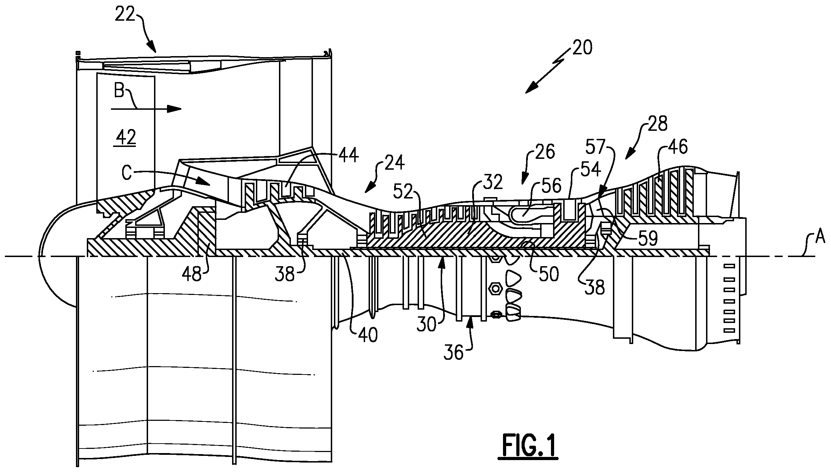

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 m (35,000 feet). The flight condition of 0.8 Mach and 10,668 m (35,000 feet), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 350 m/s (1150 ft/second). A method described herein, provides an acoustically optimized count and positioning of fan exist guide vanes in the geared turbofan architecture. In the case where the vane/blade ratio is low enough to generate an additional tone noise source, i.e. a "cut-on" condition, an acoustic feature should be applied to the surface of the guide vane to mitigate the additional tone noise.

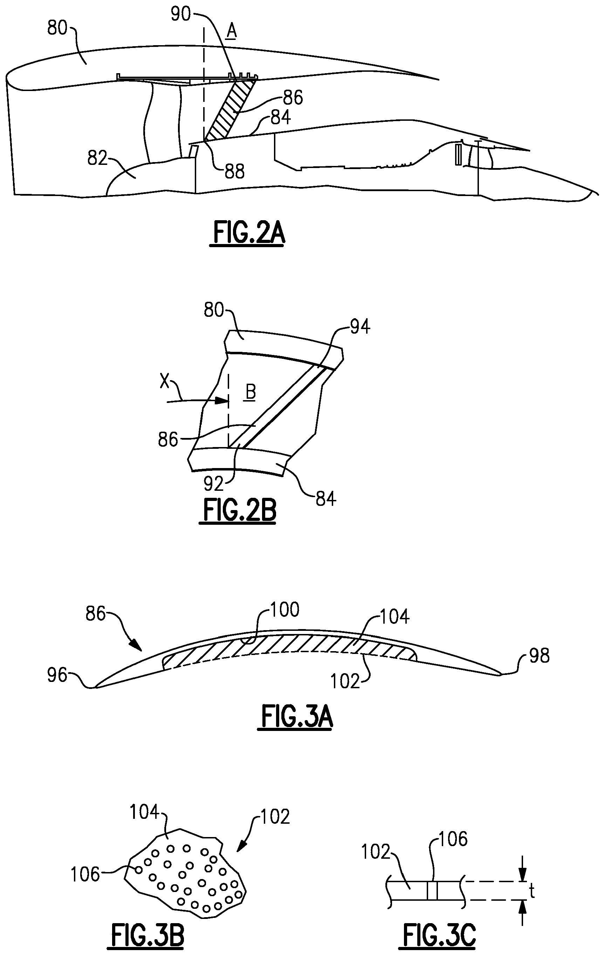

Figure 2A shows a fan which has an exit guide vane 86 provided with any one of several noise treatment features. An outer cowl 80 is spaced outwardly of a fan rotor 82. Exit guide vanes 86 extend between an outer core housing 84 and the inner surface of the cowl 80. The guide vane 86 is actually one of several circumferentially spaced guide vanes. As mentioned above, the number of guide vanes compared to the number of rotor blades on the fan rotor control the cut-off and cut-on features of the noise produced by the fan rotor. Specifically, the ratio of guide vanes to fan blades is between about .8 and about 2.5, and is described in embodiments of this disclosure.

Below some critical number the ratio can result in the noise being "cut-on." Generally this critical number is somewhere near 2. Above the critical value, the ratio of guide vanes to fan blades may result in an overall engine that sufficiently addresses the noise on its own. Thus, engines have a ratio of guide vanes to fan blades above the critical value and provide value benefits when used in a geared turbofan engine.

When the ratio is below the critical number, however, some additional acoustic feature may be in order. Three potential acoustic features are discussed below.

In Figure 2A, the fan exit guide vane 86 is shown to have optimized sweep. Sweep means that an inner periphery 88 of the vane is upstream of the location 90 of the outer periphery of the guide vane 86. The sweep angle A is greater than or equal to about 5 degrees and less than or equal to about 35 degrees. In embodiments, the sweep angle A will be greater than or equal to about 15 degrees. Optimized guide vane sweep provides a reduced noise signature for the geared turbofan.

Figure 2B shows that the vanes 86 are also be provided with optimized lean. A lean angle B will be greater than or equal to about 2.0 degrees and less than or equal to about 15 degrees. In embodiments, the lean angle will be greater than or equal to about 7 degrees. As shown in Figure 2B the vanes 86 have an outer peripheral surface 94 positioned at a greater circumferential distance from the inner periphery 92, where circumferential distance is defined in the direction of fan rotation. Optimized guide vane lean provides a reduced noise signature for the geared turbofan.

Figure 3A shows another guide vane 86 that has an acoustic feature positioned between the leading edge 96, and the trailing edge 98 of the vane, on the pressure surface of the airfoil. The acoustic feature may be an acoustic liner as shown in Figures 3A-3C. The liner has a face sheet 102 over a segmented cavity 104 sitting in an opening 100 in the vane 86. Holes 106 are in face sheet 102. These holes are typically very small. As shown in Figure 3, a thickness t of the face sheet 102 may be defined. The holes have a diameter less than or equal to about .3t. More narrowly, the diameter is less than or equal to .2t. Generally, the holes will take up at least 5% of the surface area of the material.

One micro-perforated acoustic liner may be as disclosed in US Patent US7540354B2, "Microperforated Acoustic Liner," June 2, 2009.

The several features mentioned above may all be utilized in combination.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A fan section (22) for use in a gas turbine engine comprising:
a fan rotor (82) having a plurality of fan blades;
a plurality of exit guide vanes (86) positioned to be downstream of said fan rotor (82), said fan rotor (82) being driven through a gear reduction (48); **characterised in that**:
a first ratio of a number of exit guide vanes (86) to a number of fan blades is between about .8 and about 2.5;
said exit guide vanes (86) are provided with both optimized sweep and optimized lean to provide an acoustic feature;
wherein optimized sweep means that an outer periphery of said exit guide vanes (86) is positioned to be downstream of a location of an inner periphery of said fan exit guide vane (86), and a sweep angle is between about 5 degrees and about 35 degrees; and
wherein optimized lean means that an outer periphery of said fan exit guide vane (86) is positioned at a greater circumferential distance than an inner periphery of said fan exit guide vane (86) in a direction of rotation (X) of said fan, and wherein a lean angle is between about 2 degrees and about 15 degrees;
wherein said exit guide vanes (86) have a hollow opening (100), said hollow opening (100) being covered by an acoustic liner having a face sheet (102), wherein said face sheet (102) has a thickness (t), and a diameter of holes (106) in said face sheet (102) is selected to be less than or equal to about .3 of the thickness (t) and wherein holes (106) in the face sheet (102) result in at least about 5% of a surface area of the material.

2. The section as set forth in claim 1, wherein said sweep angle is greater than or equal to about 15 degrees.

3. The section as set forth in claim 1 or 2, wherein said lean angle is greater than or equal to about 7 degrees.

4. A gas turbine engine (20) comprising:
a fan section (22) as set forth in any preceding claim;
a compression section (24) including a first compressor section (52) and a second compressor section (44);
a combustion section (26);
a turbine section (28) including a first turbine section (54) associated with said first compressor section (52), and a second turbine section (46) associated with said second compressor section (44), and said first turbine section (54) rotating at a higher speed than said second turbine section (46), and said second turbine section (46) driving said fan rotor (82) and said second compressor section (44), with a gear reduction (48) positioned to reduce a speed of said fan rotor (82) relative to a speed of said second compressor section (44).

## Patentansprüche

1. Lüfterabschnitt (22) zur Verwendung in einem Gasturbinenmotor, der Folgendes umfasst:
einen Lüfterrotor (82), der eine Vielzahl von Lüfterflügeln aufweist;
eine Vielzahl von Ausgangsleitschaufeln (86), die dem Lüfterrotor (82) nachgelagert sind, wobei der Lüfterrotor (82) durch eine Getriebereduktion (48) angetrieben ist; **dadurch gekennzeichnet, dass**:
ein erstes Verhältnis einer Anzahl von Ausgangsleitschaufeln (86) zu einer Anzahl von Lüfterflügeln zwischen etwa 0,8 bis etwa 2,5 liegt;
die Ausgangsleitschaufeln (86) mit sowohl optimierter Pfeilung als auch optimierter Neigung bereitgestellt sind, um ein akustisches Merkmal bereitzustellen;
wobei optimierte Pfeilung bedeutet, dass ein äußerer Umfang der Ausgangsleitschaufeln (86) derart positioniert ist, dass er einer Stelle eines inneren Umfangs der Lüfterausgangsleitschaufel (86) nachgelagert ist, und ein Pfeilungswinkel zwischen 5 Grad und etwa 35 Grad liegt; und
wobei optimierte Neigung bedeutet, dass ein äußerer Umfang der Lüfterausgangsleitschaufel (86) in einer größeren Umfangsentfernung in eine Drehrichtung (X) des Lüfters positioniert ist als ein innerer Umfang der Lüfterausgangsleitschaufel (86), und wobei ein Neigungswinkel zwischen etwa 2 Grad und etwa 15 Grad liegt;
wobei die Ausgangsleitschaufeln (86) eine hohle Öffnung (100) aufweisen, wobei die hohle Öffnung (100) durch eine akustische Auskleidung bedeckt ist, die eine Deckschicht (102) aufweist, wobei die Deckschicht (102) eine Dicke (t) aufweist, und ein Durchmesser von Löchern (106) in der Deckschicht (102) derart ausgewählt ist, dass er weniger als oder gleich etwa 0,3 der Dicke (t) ist und wobei Löcher (106) in der Deckschicht (102) zu etwa 5 % einer Oberfläche des Materials führen.

2. Abschnitt nach Anspruch 1, wobei der Pfeilungswinkel größer ist als oder gleich etwa 15 Grad ist.

3. Abschnitt nach Anspruch 1 oder 2, wobei der Neigungswinkel größer ist als oder gleich etwa 7 Grad ist.

4. Gasturbinenmotor (20), der Folgendes umfasst:
einen Lüfterabschnitt (22) nach einem der vorhergehenden Ansprüche:
einen Verdichterabschnitt (24), einschließlich eines ersten Verdichterabschnitts (52) und eines zweiten Verdichterabschnitts (44);
einen Verbrennungsabschnitt (26);
einen Turbinenabschnitt (28), einschließlich eines ersten Turbinenabschnitts (54), der dem ersten Verdichterabschnitt (52) zugehörig ist, und eines zweiten Turbinenabschnitts (46), der dem zweiten Verdichterabschnitt (44) zugehörig ist, und wobei der erste Turbinenabschnitt (54) zu einer höheren Geschwindigkeit dreht als der zweite Turbinenabschnitt (46) und wobei der zweite Turbinenabschnitt (46) den Lüfterrotor (82) und den zweiten Verdichterabschnitt (44) antreibt, wobei eine Getriebereduktion (48) dazu positioniert ist, eine Geschwindigkeit des Lüfterrotors (82) relativ zu einer Geschwindigkeit des zweiten Verdichterabschnitts (44) zu reduzieren.

## Revendications

1. Section de soufflante (22) destinée à être utilisée dans une turbine à gaz comprenant :
un rotor de soufflante (82) ayant une pluralité de pales de soufflante ;
une pluralité d'aubes de guidage de sortie (86) positionnées pour être en aval dudit rotor de soufflante (82), ledit rotor de soufflante (82) étant entraîné par le biais d'un réducteur (48) ; **caractérisée en ce que** :
un premier rapport entre un nombre d'aubes de guidage de sortie (86) et un nombre de pales de soufflante est entre environ 0,8 et environ 2,5 ;
lesdites aubes de guidage de sortie (86) sont pourvues à la fois d'une flèche optimisée et d'une inclinaison optimisée pour fournir une particularité acoustique ;
dans laquelle une flèche optimisée signifie qu'une périphérie extérieure desdites aubes de guidage de sortie (86) est positionnée pour être en aval d'un emplacement d'une périphérie intérieure de ladite aube de guidage de sortie (86), et un angle de flèche est entre environ 5 degrés et environ 35 degrés ; et
dans laquelle une inclinaison optimisée signifie qu'une périphérie extérieure de ladite aube de guidage de sortie (86) est positionnée à une distance circonférentielle plus importante qu'une périphérie intérieure de ladite aube de guidage de sortie de soufflante (86) dans une direction de rotation (X) de ladite soufflante, et dans laquelle un angle d'inclinaison est entre environ 2 degrés et environ 15 degrés ; dans laquelle lesdites aubes de guidage de sortie (86) ont une ouverture creuse (100), ladite ouverture creuse (100) étant couverte d'un revêtement acoustique ayant une semelle (102), dans laquelle ladite semelle (102) a une épaisseur (t), et un diamètre de trous (106) dans ladite semelle (102) est choisi pour être inférieur ou égal à environ 0,3 de l'épaisseur (t) et dans laquelle des trous (106) dans la semelle (102) représentent au moins environ 5 % d'une superficie du matériau.

2. Section selon la revendication 1, dans laquelle ledit angle de flèche est supérieur ou égal à environ 15 degrés.

3. Section selon la revendication 1 ou 2, dans laquelle ledit angle d'inclinaison est supérieur ou égal à environ 7 degrés.

4. Turbine à gaz (20) comprenant :
une section de soufflante (22) telle que présentée dans une quelconque revendication précédente ;
une section de compression (24) comportant une première section de compresseur (52) et une seconde section de compresseur (44) ;
une section de combustion (26) ;
une section de turbine (28) comportant une première section de turbine (54) associée à ladite première section de compresseur (52), et une seconde section de turbine (46) associée à ladite seconde section de compresseur (44), et ladite première section de turbine (54) tournant à une vitesse plus élevée que ladite seconde section de turbine (46), et ladite seconde section de turbine (46) entraînant ledit rotor de soufflante (82) et ladite seconde section de compresseur (44), avec un réducteur (48) positionné pour réduire une vitesse dudit rotor de soufflante (82) par rapport à une vitesse de ladite seconde section de compresseur (44).
